Europäisches Patentamt

European Patent Office

Office européen des brevets

(11) Veröffentlichungsnummer: **0 589 211 A2**

## EUROPÄISCHE PATENTANMELDUNG

(21) Anmeldenummer: **93113328.4**

(22) Anmeldetag: **20.08.93**

(51) Int. Cl.5: **G01F 1/68**

(30) Priorität: **23.09.92 DE 4231831**

(43) Veröffentlichungstag der Anmeldung:
**30.03.94 Patentblatt 94/13**

(84) Benannte Vertragsstaaten:
**DE FR GB IT**

(71) Anmelder: **PIERBURG GMBH**
**Alfred-Pierburg-Strasse 1**
**D-41460 Neuss(DE)**

(72) Erfinder: **Liedtke, Günter**
**Laupendahler-Landstrasse 17**
**D-45239 Essen(DE)**
Erfinder: **Freytag, Adolf**
**Ramrather Strasse 38**
**D-41516 Grevenbroich(DE)**

(54) **Steuer- und Auswerteschaltung für einen Luftmassenstromsensor.**

(57) 2.1 Bekannte Schaltungen eignen sich nicht für eine Bandendeprogrammierung.

2.2 Die neue Steuer- und Auswerteschaltung weist daher die Merkmale auf, daß die gesamte weitere Heizstrom- bzw. Signalstromverarbeitung inklusiv Regelung nach Digitalisierung in einem Mikrocontroller (7) erfolgt, in dem Einstellparameter als Zahlen gespeichert sind, die am Ende eines Produktionsvorgangs in Kommunikation mit einem Abgleichautomaten bei diversen Betriebspunkten des Luftmassenstromsensors (1) aus der Differenz eines Referenzwertes und eines vom Mikrocontroller (7) ermittelten Meßwertes als Korrekturwert gebildet und in den Speicher (20) des Mikrocontrollers (7) eingegeben werden.

2.3 Mit der neuen Steuer- und Auswerteschaltung ergeben sich eine Reihe von Vorteilen, die den Einsatz des Luftmassenstromsensors in Kraftfahrzeug-Brennkraftmaschinen ermöglichen.

Die Erfindung betrifft eine Steuer- und Auswerteschaltung für einen Luftmassenstromsensor, der nach dem Prinzip eines Hitzdraht- oder Heißfilmanemometers arbeitet und für den Einsatz in Kraftfanrzeug-Brennkraftmaschinen vorgesehen ist. Die nach diesem Prinzip arbeitenden Sensoren enthalten Brückenschaltungen, deren Diagonalspannung durch einen Regler zu Null geregelt wird. Entzieht nun die vorbeiströmende Luft dem beheizten Hitzdraht oder Heißfilm Wärme, dann läßt der Regler den Heizstrom ansteigen, bis die Diagonalspannung wieder zu Null geht bzw. die Brücke wieder im Gleichgewicht ist. Der Heizstrom ist ein Maß für die Luftströmung. Da es praktisch nicht möglich ist, Sensoren und Widerstände mit übereinstimmenden Kennlinien zu fertigen, gewöhnlich treten Abweichungen von $^+$ 10% auf, wird versucht, durch Änderung der Brückenwiderstände den Luftmassenstromsensor auf einen Punkt einer Sollkennlinie einzustellen. Die Toleranzen der Bauteile haben jedoch zur Folge, daß die Ist-Kennlinie außerhalb des Abgleichpunktes von der Sollkennlinie abweicht.

Aus der EP 0 274 573 B1 ist bereits eine Vorrichtung zur Erzeugung einer einheitlichen Kennlinie für Sensoren bekannt, die einen Analog-Digital-Umsetzer aufweist, dessen Ausgänge an die Abdresseneingänge eines Speichers angeschlossen sind, in dem Korrektur-Digitalwerte gespeichert sind und dessen Ausgänge mit einem Digital-Analog-Umsetzer verbunden sind. An einer Brückendiagonale dieser Vorrichtung ist ein Differenzverstärker mit nachgeschaltetem Stellglied vorgesehen, das die Betriebsspannung an der Brückenschaltung beeinflußt. Das Signal vom Sensor bzw. der diesem nachgeschalteten Anordnung und ein aus den gespeicherten Korrektur-Digitalwerten gebildetes Korrektursignal werden einander überlagert und als Signalstrom ausgegeben. Dieser Signalstrom wird von einem Stromfühler erfaßt und weiterverarbeitet. Einem bestimmten temperaturabhängigen Widerstand entspricht eine bestimmte Korrekturwerttabelle. Beim Austausch des temperaturabhängigen Widerstandes werden die Korrekturwerte geändert. Dies kann nach der Druckschrift z. B. durch eine neue Programmierung des Festwertspeichers oder durch Austausch des Festwertspeichers erfolgen.

Funktionsrelevante Daten von Steuereinrichtungen insbesondere beim Einsatz in Kraftfahrzeugen werden zunehmend erst am Montageband für das Neufahrzeug bzw. in den Werkstätten einprogrammiert.

Hierfür sind die zum Stand der Technik beschriebenen Einrichtungen jedoch nicht geeignet.

Hiervon ausgehend stellt sich die Erfindungsaufgabe, eine gattungsgemäße Steuer- und Auswerteeinrichtung für einen Luftmassenstrommesser derart zu gestalten, daß sie ein von Bauteiltoleranzen unabhängiges, einem Sollwert entsprechendes Ausgangssignal bereitstellt, das in beliebiger Form ausbildbar ist und damit eine Anpassung an bestehende Verarbeitungssysteme ermöglicht, wobei eine Bandendeprogrammierung vorgesehen ist.

Diese Aufgabe ist durch die im Kennzeichen des Patentanspruchs 1 angegebenen Merkmale gelöst worden. Vorteilhafte Weiterbildungen sind mit den Unteransprüchen angegeben.

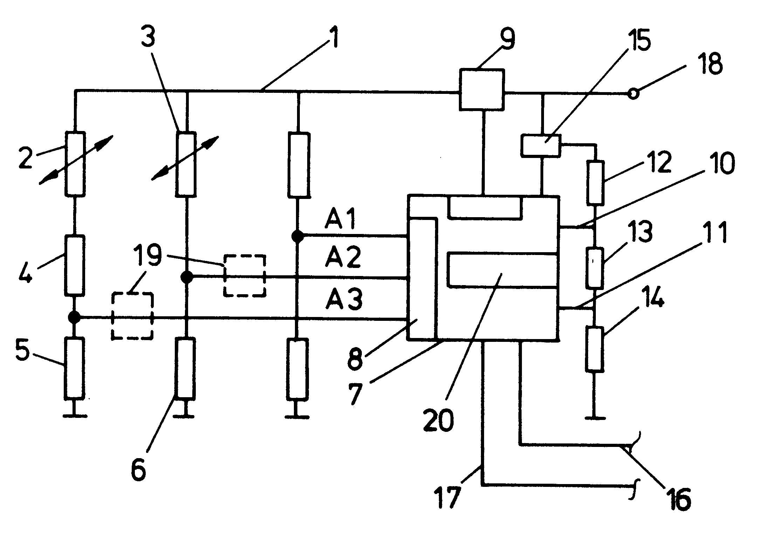

Ein Ausführungsbeispiel der Erfindung ist schematisch in der Zeichnung dargestellt und wird nachfolgend beschrieben.

Die Zeichnung zeigt eine erfindungsgemäße Steuer- und Auswerteschaltung 1 für einen Luftmassenstromsensor, der nach dem Hitzdraht- oder Heizfilmanemometerprinzip arbeitet. Die Schaltung 1 besteht aus einer Brückenschaltung mit einem Lufttemperatursensor 2, einem beheizten Hitzdraht- oder Heißfilmwiderstand 3 sowie Widerständen 4, 5 und 6. Wird der Hitzdraht- oder Heißfilmwiderstand 3 durch vorbeiströmende Luft gekühlt, dann wird über eine Regelung der Strom erhöht, bis die Diagonalspannung der Brücke wieder Null ist. Der dabei am Widerstand 3 auftretende Heizstrom wird am hochgenauen Widerstand 6 als Spannungsabfall gemessen und als Signal A2 für den Luftmassenstrom ausgewertet.

Die Brückenspannung wird über den Abgriff A2 und einem weiteren Abgriff A3 gemessen und dem Mikrocontroller 7 zugeführt. In diesem wird diese in einem Analog-Digitalumsetzer 8 in Digitalwerte umgesetzt und ein Ansteuersignal für einen Schaltregler 9 ausgegeben, dessen Aufbau und Funktion Schaltreglern für getaktete Spannungsregelung gleich sein kann, so daß sich die Diagonalspannung der Brücken gegen Null nähert.

Um eine maximale Meßgenauigkeit zu erreichen, wird der Meßbereich des Analog-Digital-Umsetzers 8 an den Eingängen 10, 11 durch Widerstände 12, 13 und 14 gegenüber einer Referenzspannung 15 so eingestellt, daß eine Auflösung (z. B. 8 Bit) voll ausgenutzt werden kann.

Der Mikrocontroller 7 weist einen Anschluß 16 für das Ausgangssignal, einen Anschluß 17 für eine Schnittstelle sowie einen Anschluß 18 für die Versorgungsspannung auf.

Die Abgriffe A2 und A3 können jeweils einen strichpunktiert dargestellten Tiefpaßfilter 19 aufweisen. Der Regelkreis wird über Software geschlossen. Durch einen digitalen Regelalgorithmus wird das Ansteuersignal für den Schaltregler 9 so eingestellt, daß sich für A2 folgende Bedingung erfüllt:

$$A2 = \alpha \cdot A3,$$

wobei $\alpha$ ein Korrekturfaktor zur Kompensation von Exemplarstreuungen des Hitzdraht- oder Heißfilmwiderstandes 3 ist, der in einem Speicher 20, vorteilhafterweise ein EEPROM, abgelegt ist.

Dieser Faktor α kann für jede Umgebungstemperatur als Satz von Korrekturfaktoren gespeichert sein und entsprechend der Lufttemperatur bei der Regelung dem Speicher 20 entnommen werden.

In einer vorteilhaften Weiterbildung ist die Lufttemperatur aus dem Spannungsabfall am und dem Strom durch den die Umgebungstemperatur anzeigenden temperaturabhängigen Widerstand 2 ermittelt, und zwar über eine im Speicher 20 des Mikrocontrollers 7 abgelegte Kennlinie.

Die zum Teil schwankende Betriebsspannung kann durch eine im Mikrocontroller vollzogene Kennlinienkorrektur kompensiert werden.
Das vom Mikrocontroller 7 über den Ausgang 16 bereitgestellte Ausgangssignal kann in Anpassung an ein weiterverarbeitetes Elektroniksystem als Analog- oder Digitalsignal ausgegeben werden, wobei es mit variabler Frequenz, Pulsbreite oder Spannung wirken kann.

Bei der Herstellung des Luftmassenstromsensors 1 werden in einer sogenannten Bandendeprogrammierung in Kommunikation über die Anschlüsse 16 und 17 mit einem Abgleichautomaten bei bestimmten Betriebspunkten des Luftmassenstromsensors 1 aus der Differenz eines Referenzwertes und eines Meßwertes Korrekturwerte gebildet und in den Speicher 20 des Mikrocontrollers 7 eingegeben.

Während dieses Abgleichvorganges wird vorteilhafterweise gleichzeitig der Satz von Korrekturfaktoren zur Kompensation der Exemplarstreuungen über der Umgebungstemperatur eingeschrieben.

Der für die Programmierung benötigte Anschluß 17 (serielle Schnittstelle) ist im Normalbetrieb nicht zugänglich, jedoch kann in einer Werkstatt ein Neuabgleich beliebig oft erfolgen.

Sofern die Veränderungen der Bauteile über der Betriebszeit bekannt sind (Alterungserscheinungen), können diese ebenfalls langfristig überwacht und kompensiert werden und ebenso durch Ablagerungen an den Meßwiderständen verursachte Abweichungen.

Durch die erfinderischen Maßnahmen ergeben sich die Vorteile: Toleranzen der Bauteile können für jeden einzelnen Luftmassenstrommesser einfach gemessen und im Speicher festgehalten werden (Bandendeprogrammierung). Im Betrieb können die ermittelten Bauteiletoleranzen als Korrekturwerte vom Mikrocontroller verarbeitet werden. Die Meßwerte können beliebig aufbereitet werden (z. B. Analogspannung, pulsweitenmodulierte Spannung usw.), Alterungserscheinungen können langfristig überwacht und korrigiert werden, Ablagerungen auf den Meßwiderständen können, soweit sie voraussehbar sind, ebenfalls korrigiert werden, Leistungswiderstände können herausgerechnet werden, eine Fehlerdiagnose ist über die serielle Schnittstelle für Werkstattdiagnose (Meßwiderstandsbruch) möglich.

**Patentansprüche**

1. Steuer- und Auswerteschaltung für einen Luftmassenstromsensor, der nach dem Prinzip eines Hitzdraht- oder Heißfilmanemometer arbeitet und bei dem in einer Brückenschaltung die Diagonalspannung auf Null geregelt und der dabei auftretende Heizstrom am Hitzdraht- oder Heißfilmwiderstand als Signal für den Luftmassenstrom ausgewertet wird, <u>dadurch gekennzeichnet</u>, daß die gesamte weitere Heizstrom- bzw. Signalstromverarbeitung inklusiv Regelung nach Digitalisierung in einem Mikrocontroller (7) erfolgt, in dem Einstellparameter als Zahlen gespeichert sind, die am Ende eines Produktionsvorgangs in Kommunikation mit einem Abgleichautomaten bei diversen Betriebspunkten des Luftmassenstromsensors (1) aus der Differenz eines Referenzwertes und eines vom Mikrocontroller (7) ermittelten Meßwertes als Korrekturwert gebildet und in den Speicher (20) des Mikrocontrollers (7) eingegeben werden.

2. Schaltung nach Anspruch 1, <u>dadurch gekennzeichnet</u>, daß während des Abgleichvorganges zusätzlich ein Satz von Korrekturfaktoren zur Kompensation von Exemplarstreuungen des Hitzdraht- oder Heißfilmwiderstandes (3) gespeichert wird, der in Abhängigkeit von der Lufttemperatur abgelegt ist.

3. Schaltung nach Anspruch 2, <u>dadurch gekennzeichnet</u>, daß die Lufttemperatur aus dem Spannungsabfall am und dem Strom durch einen temperaturabhängigen Widerstand (2) der Brückenschaltung aus einer im Mikrocontroller (7) abgelegten Kennlinie ermittelt wird.

4. Schaltung nach Anspruch 1, 2 oder 3, <u>dadurch gekennzeichnet</u>, daß die schwankende Betriebsspannung durch eine Kennlinien-Korrektur kompensiert wird.

5. Schaltung nach einem der vorstehenden Ansprüche, <u>dadurch gekennzeichnet</u>, daß das aus Heizstrom/Signalstrom und Korrekturwerten gebildete Ausgangssignal als Analog- oder Digitalsignal ausgegeben wird, wobei es mit variabler Frequenz, Pulsbreite oder Spannung wirken kann, in Anpassung an ein weiterverarbeitendes Elektroniksystem.